# EUROPÄISCHE PATENTSCHRIFT

(11) **EP 1 276 685 B1**
(45) Veröffentlichungstag und Bekanntmachung des Hinweises auf die Patenterteilung: **14.04.2004**
(21) Anmeldenummer: 01940099.3
(22) Anmeldetag: 28.03.2001
(51) Int. Cl.: B65G 19/22, E21F 13/08

(54) **KETTENKRATZERFÖRDERER FÜR DEN UNTERTÄGIGEN BERGBAUEINSATZ**
SCRAPER CHAIN CONVEYOR FOR USE IN UNDERGROUND MINING
CONVOYEUR A CHAINE A RACLETTES DESTINE A L'EXPLOITATION MINIERE SOUTERRAINE

(30) Priorität: 22.04.2000 DE 10020021
(43) Veröffentlichungstag der Anmeldung: 22.01.2003
(73) Patentinhaber: RAG Aktiengesellschaft, 45128 Essen (DE)
(72) Erfinder: WIEJACK-SYMANN, Elmar, 46539 Dinslaken (DE); SCHMIDT, Frank-Hasso, 45359 Essen (DE)
(74) Vertreter: Müller, Karl-Ernst, Dr., Dipl.-Ing.
(86) Internationale Anmeldenummer: PCT/DE2001/001200
(87) Internationale Veröffentlichungsnummer: WO 2001/081211

(56) Entgegenhaltungen:
- CN-A- 1 148 133
- DE-A- 3 400 553
- DE-A- 3 400 644
- US-A- 4 096 307
- US-A- 5 552 185

## Beschreibung

Die Erfindung betrifft einen Kettenkratzerförderer für den untertägigen Bergbaueinsatz, insbesondere im Steinkohlenbergbau, bestehend aus miteinander verbundenen profilierten Fördererrinnen, darin geführten Fördererketten mit an den Ketten angeschlagenen Mitnehmern sowie mit wenigstens einem Antrieb für die Fördererketten.

Derartige Kettenkratzerförderer sind durch Benutzung bekannt; siehe z.B. das Dokument DE 34 00 644 A, sie zeichnen sich beispielsweise bei einem Einsatz als Strebförderer insbesondere bei den heute üblichen großen Streblängen dadurch aus, daß die von dem Antrieb des Kettenkratzerförderers zu bewegenden Fördererketten und die von diesen getragenen Mitnehmer eine ganz erhebliche Masse darstellen, zu deren Bewegung immer höhere Antriebsleistungen vorgehalten werden müssen. Abgesehen von dem hohen Energiebedarf weisen die erforderlichen Antriebseinheiten ein erhebliches Bauvolumen auf, so daß auch die Grubenräume zum Aufstellen und Transport derartiger Antriebseinheiten entsprechend groß dimensioniert sein und zu erheblichen Kosten erstellt werden müssen.

Der Erfindung liegt daher die Aufgabe zugrunde, bei einem Kettenkratzerförderer mit den gattungsgemäßen Merkmalen die von dem zugehörigen Antrieb zu bewegenden Massen zu verringern.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß Fördererketten und/oder Mitnehmer zumindest teilweise aus einem selbstverlöschenden, schwer entflammbaren und antistatische Materialeigenschaften aufweisenden Kunststoff mit hoher mechanischer Festigkeit bestehen.

Mit der Erfindung ist der Vorteil verbunden, daß aufgrund der mit dem Einsatz von Kunststoff als Werkstoff für die Herstellung der Fördererketten und/oder Mitnehmer verbundenen Gewichtsreduzierung die erforderliche zu installierende Antriebsleistung deutlich geringer ausgelegt werden kann, womit in vorteilhafter Weise zunächst ein geringerer Energieverbrauch verbunden ist. Kleiner bauende Antriebseinheiten haben jedoch auch nicht mehr einen so großen Raumbedarf, so daß in Abhängigkeit von den Abbaubedingungen die Einbauten in Streb-/Streckenübergängen reduziert und diese Grubenräume gegebenenfalls geringer dimensioniert werden können.

Ein weiterer Vorteil besteht darin, daß die Mitnehmer aufgrund ihres geringeren Eigengewichts einen größer ausgelegten Querschnitt aufweisen könnten, ohne daß dies wesentliche Auswirkungen auf die zu installierende Antriebsleistung hätte, so daß ein derartig ausgerüsteter Kettenkratzerförderer ein größeres Fördervolumen bewältigen kann.

Eine weitere positive Materialeigenschaft von Kunststoff ist in der hohen Materialdämpfung zu sehen, und hierdurch ist in vorteilhafter Weise ein gutes Verhalten bei Biegung, Torsion und Geräuschentwicklung der in den Fördererrinnen laufenden Fördererketten und Mitnehmer zu erreichen.

Nach einem Ausführungsbeispiel der Erfindung kann vorgesehen sein, daß die Mitnehmer aus einer die äußere Form des Mitnehmers vorgebenden metallischen Hülle bestehen, wobei der Innenraum der metallischen Hülle mit dem Kunststoff ausgefüllt ist; mit einer derartigen Ausführung der Mitnehmer kann bereits eine erhebliche Einsparung an Totlast erreicht werden.

Soweit angestrebt wird, die Mitnehmer vollständig und nach Möglichkeit auch die Fördererketten aus einem für den untertägigen Einsatz geeigneten Kunststoff herzustellen, kann dieser Kunststoff im Hinblick auf die erforderliche mechanische Festigkeit ein Faserverbundwerkstoff oder ein kohlenstoffaserverstärkter Kunststoff sein, der ausreichende mechanische Kenndaten, wie ausreichende Schlagzähigkeit, Druckfestigkeit etc. aufweist. Hierbei kann auch vorgesehen sein, daß der Kunststoff ein thermoplastisches Gußmaterial ist, welches beispielsweise wiederum Faserverstärkungen aufweisen kann.

Nach einem Ausführungsbeispiel der Erfindung ist vorgesehen, daß der zum Einsatz kommende Kunststoff ein kristalliner, thermoplastischer Kunststoff, vorzugsweise ein unter der Bezeichnung Polyamid 6 bekannt gewordener Kunststoff ist.

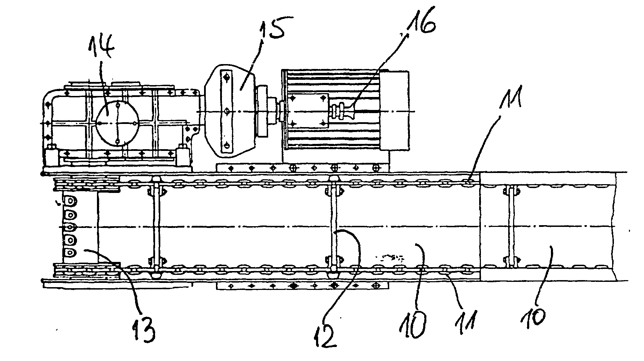

Die Zeichnung zeigt einen Kettenkratzerförderer als Gegenstand der Erfindung in einer Draufsicht, und zwar im Bereich seiner Antriebsstation. Der Kettenkratzerförderer besteht aus einzelnen miteinander verbundenen Fördererrinnen 10, in deren seitlichen Bereichen zwei Fördererketten 11 geführt sind. Zwischen den Fördererketten 11 sind Mitnehmer 12 angeordnet, die mit den Fördererketten 11 verbunden sind und beim Umlauf in den Fördererrinnen 10 für den Transport des abzufördernden Materials sorgen. Am Ende des aus den Fördererrinnen 10 bestehenden Stranges befindet sich eine Antriebstrommel 13 für die Fördererketten 11, die von einem über ein zwischengeschaltetes Kegelstirnradgetriebe 14 und eine davor geschaltete Kupplung 15 angeschlossenen Elektromotor 16 antreibbar ist.

Die in der vorstehenden Beschreibung, den Patentansprüchen und der Zusammenfassung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Kettenkratzerförderer für den untertägigen Bergbaueinsatz, insbesondere im Steinkohlenbergbau, bestehend aus miteinander verbundenen profilierten Fördererrinnen (10), darin geführten Fördererketten (11) mit an den Ketten (11) angeschlagenen Mitnehmern (12) sowie mit wenigstens einem Antrieb (16) für die Fördererketten (11), **dadurch gekennzeichnet, daß** Fördererketten (11) und/oder Mitnehmer (12) zumindest teilweise aus einem selbstverlöschenden, schwer entflammbaren und antistatische Materialeigenschaften aufweisenden Kunststoff mit hoher mechanischer Festigkeit bestehen.

2. Kettenkratzerförderer nach Anspruch 1, **dadurch gekennzeichnet, daß** die Mitnehmer (12) aus einer die äußere Form des Mitnehmers vorgebenden metallischen Hülle bestehen, wobei der Innenraum der metallischen Hülle mit dem Kunststoff ausgefüllt ist.

3. Kettenkratzerförderer nach Anspruch 1 oder 2, **dadurch gekennzeichnet, daß** der Kunststoff ein Faserverbundwerkstoff ist.

4. Kettenkratzerförderer nach Anspruch 1 oder 2, **dadurch gekennzeichnet, daß** der Kunststoff ein kohlenfaserverstärkter Kunststoff ist.

5. Kettenkratzerförderer nach einem der Ansprüche 1 bis 4, **dadurch gekennzeichnet, daß** der Kunststoff ein thermoplastisches Gußmaterial ist.

6. Kettenkratzerförderer nach einem der Ansprüche 1 bis 4, **dadurch gekennzeichnet, daß** der Kunststoff ein kristalliner thermoplastischer Kunststoff ist.

7. Kettenkratzerförderer nach Anspruch 6, **dadurch gekennzeichnet, daß** der Kunststoff ein Polyamid 6 ist.

## Claims

1. Drag chain conveyor for use in underground mining, in particular in coal mining, consisting of profiled conveyor troughs (10) which are connected together, conveyor chains (11), which are guided in the latter, with drivers (12) which are fastened to the chains (11) and with at least one drive (16) for the conveyor chains (11), **characterised in that** the conveyor chains (11) and/or drivers (12) consist at least in part of a self-extinguishing plastics material of low flammability which has antistatic properties and a high mechanical strength.

2. Drag chain conveyor according to Claim 1, **characterised in that** the drivers (12) consist of a metallic case which determines the outer form of the driver, wherein the interior space of the metallic case is filled with the plastics material.

3. Drag chain conveyor according to Claim 1 or 2, **characterised in that** the plastics material is a fibre composite.

4. Drag chain conveyor according to Claim 1 or 2, **characterised in that** the plastics material is a carbon fibre-reinforced plastics material.

5. Drag chain conveyor according to any one of Claims 1 to 4, **characterised in that** the plastics material is a thermoplastic casting material.

6. Drag chain conveyor according to any one of Claims 1 to 4, **characterised in that** the plastics material is a crystalline, thermoplastic plastics material,

7. Drag chain conveyor according to Claim 6, **characterised in that** the plastics material is a Polyamide 6.

## Revendications

1. Convoyeur à raclettes à chaîne pour l'exploitation de mines souterraines, en particulier pour les mines de charbon, comprenant des goulottes de convoyage (10) profilées, assemblées les unes aux autres, des chaînes de convoyage (11) guidées dans celles-ci avec des taquets d'entraînement (12) fixés contre les chaînes (11), ainsi qu'au moins un mécanisme d'entraînement (16) pour les chaînes de convoyage (11), **caractérisé en ce que** les chaînes de convoyage (11) et/ou les taquets d'entraînement (12) sont réalisés au moins en partie dans une matière plastique auto-extinctrice, difficilement inflammable, à propriétés antistatiques et avec une résistance mécanique élevée.

2. Convoyeur à raclettes à chaîne selon la revendication 1, **caractérisé en ce que** les taquets d'entraînement (12) sont formés par une gaine métallique prédéfinissant la forme extérieure du taquet d'entraînement, l'espace intérieur de la gaine métallique étant comblé par la matière plastique.

3. Convoyeur à raclettes à chaîne selon la revendication 1 ou 2, **caractérisé en ce que** la matière plastique est une matière plastique composite renforcée par fibres.

4. Convoyeur à raclettes à chaîne selon la revendication 1 ou 2, **caractérisé en ce que** la matière plastique est une matière plastique renforcée par des fibres de carbone.

5. Convoyeur à raclettes à chaîne selon l'une quelconque des revendications 1 à 4, **caractérisé en ce que** la matière plastique est une matière moulée thermoplastique.

6. Convoyeur à raclettes à chaîne selon l'une quelconque des revendications 1 à 4, **caractérisé en ce que** la matière plastique est une matière thermoplastique cristalline.

7. Convoyeur à raclettes à chaîne selon la revendication 6, **caractérisé en ce que** la matière plastique est un polyamide 6.
